# EUROPEAN PATENT APPLICATION

(11) **EP 4 579 937 A1**
(43) Date of publication of application: **02.07.2025**
(21) Application number: 23897423.2
(22) Date of filing: 09.11.2023
(51) Int. Cl.: H01M 50/586, C08L 81/02, C08L 83/04, H01M 50/588, H01M 50/591, H01M 50/593, H01M 50/121, H01M 50/193

(54) **POLYPHENYLENE SULFIDE RESIN COMPOSITION FOR BATTERY INSULATION MEMBER, AND BATTERY INSULATION MEMBER**

(30) Priority: 29.11.2022 JP 2022189965; 22.06.2023 JP 2023102252
(71) Applicant: Toray Industries, Inc., Tokyo 103-8666 (JP)
(72) Inventor: HIRASE, Tomohiro, Nagoya-shi, Aichi 455-8502 (JP); ISAGO, Hiroyuki, Nagoya-shi, Aichi 455-8502 (JP); FUKUYASU, Koki, Nagoya-shi, Aichi 455-8502 (JP); KONDO, Shunsuke, Tokai-shi, Aichi 476-8567 (JP)
(74) Representative: Mewburn Ellis LLP
(86) International application number: PCT/JP2023/040363
(87) International publication number: WO 2024/116770

(57) **Abstract**

A polyphenylene sulfide resin composition for a battery insulation member, including: a polyphenylene sulfide resin (a); and a silicone elastomer with crosslinked structure (b), wherein the resin composition comprises 0.1 to 15.0 parts by weight of the silicone elastomer with crosslinked structure (b) with respect to 100 parts by weight of the polyphenylene sulfide resin (a), and has a flexural modulus of 3.1 GPa or more and 3.6 GPa or less in the flexural test in accordance with ISO 178 (2010) on a test piece obtained by injection molding of the resin composition. A polyphenylene sulfide resin composition for a battery insulation member, and a battery insulation member, which combine excellent productivity, safety, and long-term reliability can be obtained.

## Description

### Technical Field

The present invention relates to a polyphenylene sulfide resin composition for a battery insulation member, and a battery insulation member, which combine excellent productivity, safety, and long-term reliability.

### Background Art

Against a backdrop of growing awareness of global environmental protection, electric vehicles that can curb CO₂ emissions while driving and secondary batteries for home use for the purpose of efficiently using surplus electricity at night are becoming widely available, and storage batteries used in vehicles and for residential stationary applications are required to be even more efficient.

A polyphenylene sulfide (hereinafter sometimes abbreviated as PPS) resin is a super engineering plastic that has a well-balanced combination of properties such as heat resistance, chemical resistance, and flame retardance. Due to its cost advantage over other super engineering plastics, the PPS resin is the second most versatile resin material after the five major engineering plastics, and is used in practice in a wide range of applications including automotive, housing equipment, electrical and electronic applications, and has been studied for application to various battery components.

Patent Literature 1 discloses a PPS resin composition including an olefinic elastomer, which is a type of thermoplastic elastomer, and a gasket for a secondary battery including the PPS resin composition. The present PPS resin composition has achieved improvement in resistance to moist heat, electrolyte resistance, and compressive stress relaxation property under constant strain by blending olefinic elastomer which is a flexible material with the PPS resin, and the present PPS resin composition is applied to a gasket for a secondary battery.

Patent Literature 2 discloses the PPS resin composition that is envisaged to be applied to electrode insulation sealants for lithium batteries and other devices, and that has been imparted with excellent high-temperature compression creep resistance and high weld strength by adding silicone oil as a silane compound to the PPS resin.

Patent Literature 3 has achieved improvement in resistance to moist heat, electrolyte resistance, and compressive stress relaxation property under constant strain by adding inorganic powder carrying silicone oil as a silicone compound to the PPS resin, and the present PPS resin composition is applied to a gasket for a secondary battery.

### Citation List

### Patent Literature

Patent Literature 1: JP 2011-29167 A
Patent Literature 2: JP 2001-2920 A
Patent Literature 3: JP 2011-29166 A

### Summary of Invention

### Technical Problem

Storage batteries such as lithium-ion batteries used in vehicles and residential stationary applications face the issue of degradation of battery performance due to the effects of heat in the usage environment. Therefore, in battery development, attention is increasingly focused on the long-term reliability and suppression of deterioration of materials used for battery members from the viewpoint of lifetime management during long-term use of batteries. Specifically, improvements in bleed-out resistance, retention of physical properties, and creep resistance during long-term high-temperature use are expected to improve the long-term reliability of batteries. From the viewpoint of productivity of battery members, the toughness of the material is important in order to prevent breakage to the insulation member when it is crimped during the battery production step. In addition, from the viewpoint of battery safety, there is a need to improve the flame retardance of battery members.

However, the inventors evaluated the flame retardance of the resin composition including PPS resin and olefinic elastomer described in Patent Literature 1, and found that the flame retardance of the resin composition is significantly reduced compared to that of the PPS resin alone. This is considered to be due to the fact that while the PPS resin alone has high flame retardance, the flame retardance of the composition was reduced by blending with an olefinic elastomer, which has significantly inferior flame retardance. In addition, retention rate of toughness before and after long-term high-temperature treatment was evaluated and found to be significantly reduced. While the present composition advantageously has flexibility and toughness, it does not exhibit the excellent flame retardance and long-term high-temperature durability that are inherent to the PPS resin, and therefore has a problem of reduced safety and long-term reliability when used in battery applications.

The present inventors evaluated the PPS resin composition including silicone oil added to the PPS resin described in Patent Literature 2 for the long-term high-temperature durability and, as a result, found that a bleed-out component that is thought to be derived from the silicone oil component is generated on the surface of the molded product after treatment, compared to the PPS resin alone. When the resin composition is applied to battery members, there is concern that the generation of bleed-out components from the surface of the molded product will lead not only to a decrease in the insulation but also to a decrease in the power generation efficiency of the battery, which is not preferable.

The PPS resin in which inorganic powder carrying silicone oil is added to the PPS resin described in Patent Literature 3 fails to attain toughness required for battery insulation members due to the addition of inorganic powder, resulting in a decrease in the productivity and long-term reliability of the battery members, which is not preferable.

Therefore, an object of the present invention is to obtain a polyphenylene sulfide resin composition for a battery insulation member which combines excellent productivity, safety, and long-term reliability.

### Solution to Problem

The present inventors have studied to solve such problems and, as a result, found that, a polyphenylene sulfide resin composition having flexural modulus of 3.1 GPa or more and 3.6 GPa or less, which is produced by blending the polyphenylene sulfide resin (a) and the silicone elastomer with crosslinked structure (b) at a certain composition, and applied to battery insulation members, has properties combining safety and long-term reliability while possessing excellent productivity. That is, the present invention has been made to solve at least some of the above-mentioned problems and can be implemented as the following embodiments.

(1) A polyphenylene sulfide resin composition for a battery insulation member, including:
   a polyphenylene sulfide resin (a); and
   a silicone elastomer with crosslinked structure (b),
   wherein the resin composition includes 0.1 to 15.0 parts by weight of the silicone elastomer with crosslinked structure (b) with respect to 100 parts by weight of the polyphenylene sulfide resin (a), and has a flexural modulus of 3.1 GPa or more and 3.6 GPa or less in the flexural test in accordance with ISO 178 (2010) on a test piece obtained by injection molding of the resin composition.
(2) The polyphenylene sulfide resin composition for a battery insulation member according to (1), wherein the resin composition contains substantially no thermoplastic elastomer (c).
(3) The polyphenylene sulfide resin composition for a battery insulation member according to (1) or (2), wherein in measurement according to UL94 standard on a test piece obtained by injection molding of the resin composition, flame retardance measured on the test piece with a thickness of 1.0 mmt or less is V-0.
(4) The polyphenylene sulfide resin composition for a battery insulation member according to any one of (1) to (3), which has a tensile elongation at break of 8% or more in a tensile test according to ISO527-1,2 (2012) on a test piece obtained by injection molding of the resin composition.
(5) The polyphenylene sulfide resin composition for a battery insulation member according to any one of (1) to (4), wherein the silicone elastomer with crosslinked structure (b) is microparticles having an average primary particle diameter of 100 nm to 10 µm.
(6) The polyphenylene sulfide resin composition for a battery insulation member according to any one of (1) to (5), wherein shore hardness A of the silicone elastomer with crosslinked structure (b) is 60 HS or less.
(7) The polyphenylene sulfide resin composition for insulation member according to any one of (1) to (6), wherein the silicone elastomer with crosslinked structure (b) contains 90 wt% or more of constituent units derived from organopolysiloxane.
(8) A battery insulation member including the polyphenylene sulfide resin composition for a battery insulation member according to any one of (1) to (7). Advantageous Effects of Invention

According to the present invention, a polyphenylene sulfide resin composition for a battery insulation member, and a battery insulation member, which combine excellent productivity, safety, and long-term reliability can be obtained. Description of Embodiments

Embodiments of the present invention will be described in detail below.

### (1) Polyphenylene Sulfide Resin (a)

The polyphenylene sulfide resin (a) used in the present invention is a polymer having a repeating unit of the following structural formula:

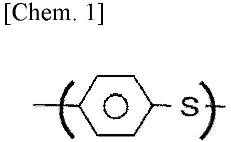

From the viewpoint of the heat resistance, a polymer containing 70 mol% or more, and more particularly 90 mol% or more of a polymer containing repeating units of the above structural formula is preferred. Furthermore, less than about 30 mol% of the repeating units of the PPS resin (a) may be composed of repeating units having the following structure.

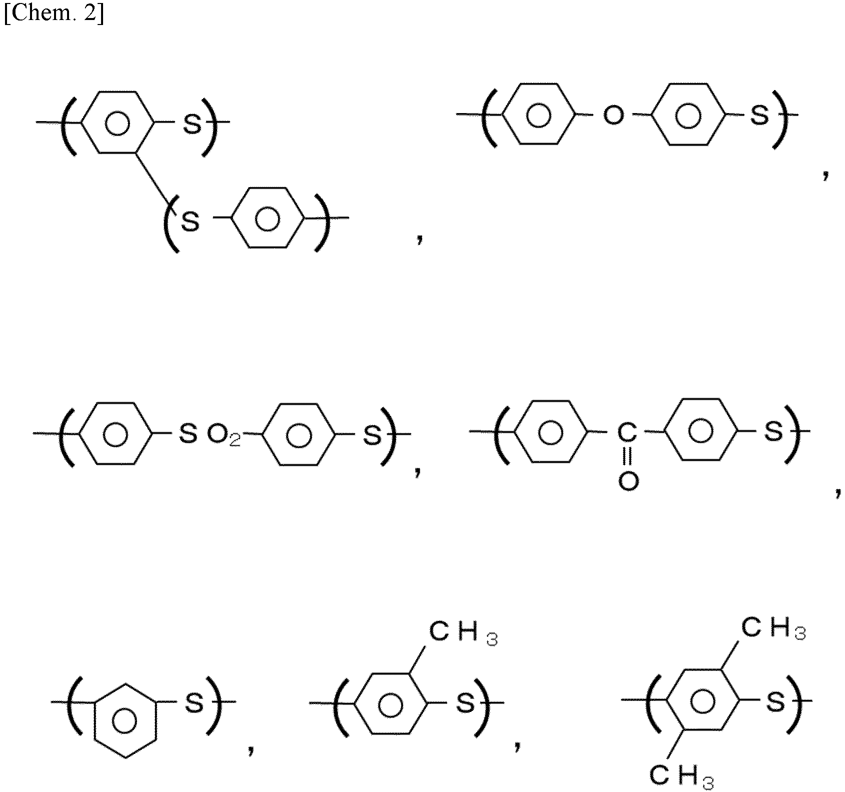

Since PPS copolymers partially having such a structure have a lower melting point compared to the typical melting point of PPS, which is 280°C, the resin composition has an advantage in terms of moldability.

The weight average molecular weight of the PPS resin (a) used in the present invention is not particularly limited, but in order to obtain more excellent mechanical properties, the weight average molecular weight is preferably from 30,000 to 150,000, more preferably from 40,000 to 130,000, even more preferably from 45,000 to 110,000, and still more preferably from 50,000 to 90,000. When the weight average molecular weight is small, the mechanical properties of the PPS resin itself will be reduced, resulting in member destruction during the crimping and fitting steps at the time of producing battery members. Therefore, the weight average molecular weight is preferably 30,000 or more. From the viewpoint of flame retardance, a weight average molecular weight of 30,000 or more is also preferred because a small weight average molecular weight causes drip generation and surface renewal (reappearance of flammable components on the surface due to dripping) during the flame retardant test, resulting in a decrease in flame retardance. On the other hand, when the weight average molecular weight exceeds 150,000, the melt viscosity becomes significantly larger, which tends to be unpreferable in the molding processing. In the present invention, a plurality of PPS resins (a) with different weight average molecular weights may be mixed and used.

The weight average molecular weight in the present invention is a value calculated in terms of polystyrene using Gel Permeation Chromatography (GPC) manufactured by Senshu Scientific Co., ltd.

A method of producing the PPS resin (a) used in the present invention will be described below. However, the method is not limited to the following method as long as the PPS resin (a) with the properties described above can be obtained.

First, the details of the polyhalogenated aromatic compounds, sulfurizing agents, polymerization solvents, molecular weight regulators, polymerization aids, and polymerization stabilizers used in the production method will be described below.

### [Polyhalogenated Aromatic Compound]

The polyhalogenated aromatic compound refers to a compound having two or more halogen atoms in one molecule. Specific examples include polyhalogenated aromatic compounds such as p-dichlorobenzene, m-dichlorobenzene, o-dichlorobenzene, 1,3,5-trichlorobenzene, 1,2,4-trichlorobenzene, 1,2,4,5-tetrachlorobenzene, hexachlorobenzene, 2,5-dichlorotoluene, 2,5-dichloro-p-xylene, 1,4-dibromobenzene, 1,4-diiodobenzene, 1-methoxy-2,5-dichlorobenzene. Preferably, p-dichlorobenzene is used. In addition, for the purpose of introducing a carboxyl group, it is also one of preferred aspects to use a carboxyl group-containing dihalogenated aromatic compound such as 2,4-dichlorobenzoic acid, 2,5-dichlorobenzoic acid, 2,6-dichlorobenzoic acid, or 3,5-dichlorobenzoic acid, or a mixture thereof, as a copolymerization monomer. It is also possible to combine two or more different polyhalogenated aromatic compounds to form a copolymer, but it is preferred that the main component is a p-dihalogenated aromatic compound.

Examples of the amount of the polyhalogenated aromatic compound used is in the range of 0.9 to 2.0 moles, preferably 0.95 to 1.5 moles, more preferably 1.005 to 1.2 moles per mole of the sulfurizing agent, in terms of obtaining the PPS resin (a) with a viscosity suitable for processing.

### [Sulfurizing Agent]

Examples of sulfurizing agents include alkali metal sulfides, alkali metal hydrosulfides, and hydrogen sulfide.

Specific examples of alkali metal sulfides include lithium sulfide, sodium sulfide, potassium sulfide, rubidium sulfide, cesium sulfide, and mixtures of two or more of them. Among them, sodium sulfide is preferably used. These alkali metal sulfides can be used as hydrates or aqueous mixtures or in the form of anhydrides.

Specific examples of alkali metal hydrosulfides include sodium hydrosulfide, potassium hydrosulfide, lithium hydrosulfide, rubidium hydrosulfide, cesium hydrosulfide, and mixtures of two or more of them. Among them, sodium hydrosulfide is preferably used. These alkali metal hydrosulfides can be used as hydrates or aqueous mixtures or in the form of anhydrides.

Alkali metal sulfides prepared from alkali metal hydrosulfides and alkali metal hydroxides in a reaction system in situ can also be used. Alkali metal sulfide can also be prepared from alkali metal hydrosulfide and alkali metal hydroxide, and transferred to a polymerization tank for use.

Alternatively, an alkali metal sulfide prepared from an alkali metal hydroxide such as lithium hydroxide or sodium hydroxide and hydrogen sulfide in a reaction system in situ can also be used. An alkali metal sulfide can be prepared from an alkali metal hydroxide such as lithium hydroxide or sodium hydroxide and hydrogen sulfide, and transferred to a polymerization tank for use.

The amount of sulfurizing agent charged means, in a case where partial loss of sulfurizing agent occurs before the beginning of the polymerization reaction due to dehydration operation or other reasons, the amount of remaining sulfurizing agent obtained by subtracting such loss from the amount of sulfurizing agent actually charged.

Alkali metal hydroxides and/or alkaline earth metal hydroxides can also be used together with the sulfurizing agent. Specific examples of alkali metal hydroxide preferably include sodium hydroxide, potassium hydroxide, lithium hydroxide, rubidium hydroxide, cesium hydroxide, and mixtures of two or more of them. Specific examples of alkaline earth metal hydroxide include calcium hydroxide, strontium hydroxide, and barium hydroxide. Among them, sodium hydroxide is preferably used.

When alkali metal hydrosulfide is used as a sulfurizing agent, it is particularly preferable to use alkali metal hydroxide simultaneously, and the amount of the alkali metal hydrosulfide used can range from 0.95 to 1.20 moles, preferably from 1.00 to 1.15 moles, more preferably from 1.005 to 1.100 moles with respect to 1 mole of alkali metal hydrosulfide.

### [Polymerization Solvent]

As the polymerization solvent, it is preferable to use an organic polar solvent. Specific examples include N-alkylpyrrolidones such as N-methyl-2-pyrrolidone, N-ethyl-2-pyrrolidone, caprolactams such as N-methyl-ε-caprolactam, aprotic organic solvents represented by 1,3-dimethyl-2-imidazolidinone, N,N-dimethylacetamide, N,N-dimethylformamide, hexamethylphosphoric triamide, dimethyl sulfone, tetramethylene sulfoxide, and the like, and a mixture thereof. All of them are preferably used because of their high reaction stability. Among them, N-methyl-2-pyrrolidone (hereinafter sometimes abbreviated as NMP) is particularly preferably used.

The amount of the organic polar solvent used is selected from the range of 2.0 to 10 moles, preferably 2.25 to 6.0 moles, and more preferably 2.5 to 5.5 moles, per mole of the sulfurizing agent.

### [Molecular Weight Regulator]

A monohalogen compound (which does not necessarily have to be an aromatic compound) can be used in combination with the polyhalogenated aromatic compound in order to form terminals of the PPS resin (a) to be produced or to adjust the polymerization reaction or molecular weight.

### [Polymerization Aids]

In order to obtain the PPS resin (a) with a relatively high degree of polymerization in a shorter time, it is also one of preferred aspects to use a polymerization aid. The polymerization aid herein means a substance that has the effect of increasing the viscosity of the resulting PPS resin (a). Specific examples of such polymerization aids include organic carboxylates, water, alkali metal chlorides, organic sulfonates, alkali metal sulfates, alkaline earth metal oxides, alkali metal phosphates, and alkaline earth metal phosphates. They can be used alone or two or more of them may be used simultaneously. Among them, organic carboxylates, water, and alkali metal chlorides are preferred. Alkali metal carboxylates are preferred as organic carboxylates and lithium chloride is preferred as an alkali metal chlorides.

The above alkali metal carboxylates are alkali metals of the general formula R(COOM)ₙ (wherein R is a C₁₋₂₀ alkyl, cycloalkyl, aryl, alkylaryl or arylalkyl group, M is an alkali metal selected from lithium, sodium, potassium, rubidium and cesium, and n is an integer from 1 to 3). Alkali metal carboxylates can also be used as hydrates, anhydrides or aqueous solutions. Specific examples of alkali metal carboxylates include lithium acetate, sodium acetate, potassium acetate, sodium propionate, lithium valerate, sodium benzoate, sodium phenylacetate, potassium p-toluylate, and mixtures thereof.

The alkali metal carboxylate may be formed by reacting an organic acid with one or more compounds selected from the group consisting of an alkali metal hydroxide, an alkali metal carbonate, and an alkali metal bicarbonate, each in approximately equal chemical equivalent amount. Among the above alkali metal carboxylates, a lithium salts have high solubility in the reaction system and have a large auxiliary effect, but are expensive, while potassium, rubidium and cesium salts are thought to have insufficient solubility in the reaction system. Therefore, sodium acetate, which is inexpensive and has moderate solubility in the polymerization system, is most preferably used.

When these alkali metal carboxylates are used as polymerization aids, the amount used is usually in the range of 0.01 mol to 2 mol with respect to 1 mole of the charged alkali metal sulfide. To obtain a higher degree of polymerization, the amount used is preferably in the range of 0.1 mol to 0.6 mol, and more preferably in the range of 0.2 mol to 0.5 mol.

When water is used as a polymerization aid, the amount added is usually in the range of 0.3 mol to 15 mol with respect to 1 mole of the charged alkali metal sulfide. In terms of obtaining a higher degree of polymerization, the amount used is preferably in the range of 0.6 mol to 10 mol, and more preferably in the range of 1 mol to 5 mol.

Two or more of these polymerization aids can of course be used in combination. For example, when alkali metal carboxylates and water are used in combination, a higher molecular weight can be achieved with a smaller amount of each of them.

The timing of adding these polymerization aids is not particularly specified. The polymerization aids may be added at any time during the preceding step described below, at the beginning of polymerization, or during the polymerization, or may be added in several portions. In a case where alkali metal carboxylate is used as a polymerization aid, however, it is more preferable to add them simultaneously at the beginning of the preceding step or at the beginning of polymerization from the viewpoint of ease of addition. In a case where water is used as a polymerization aid, it is effective to add it during the polymerization reaction, after the polyhalogenated aromatic compound is charged.

### [Polymerization Stabilizer]

A polymerization stabilizer can also be used to stabilize the polymerization reaction system and prevent side reactions. The polymerization stabilizer contributes to stabilization of the polymerization reaction system and suppresses undesirable side reactions. One indication of side reactions is a generation of thiophenol, and the generation of thiophenol can be suppressed by adding a polymerization stabilizer. Specific examples of the polymerization stabilizers include compounds such as alkali metal hydroxides, alkali metal carbonates, alkaline earth metal hydroxides, and alkaline earth metal carbonates. Among them, alkali metal hydroxides such as sodium hydroxide, potassium hydroxide, and lithium hydroxide are preferred. The alkali metal carboxylate mentioned above also act as a polymerization stabilizer. As described above, when an alkali metal hydrosulfide is used as the sulfurizing agent, it is particularly preferable to use an alkali metal hydroxide simultaneously. Here, an excess of the alkali metal hydroxide relative to the sulfurizing agent can also function as a polymerization stabilizer.

These polymerization stabilizers can be used individually or in combination of two or more. The polymerization stabilizer is used in a ratio of usually 0.02 to 0.2 mol, preferably 0.03 to 0.1 mol, more preferably 0.04 to 0.09 mol, with respect to 1 mole of the charged alkali metal sulfide. The ratio being low results in insufficient stabilizing effect, while the ratio being high tends to be economically unprofitable or reduce the polymer yield.

The timing of adding the polymerization stabilizers is not particularly specified. The polymerization stabilizers may be added at any time during the preceding step described below, at the beginning of polymerization, or during the polymerization, or may be added in several portions. However, it is more preferable to add the polymerization stabilizers simultaneously at the beginning of the preceding step or at the beginning of polymerization from the viewpoint of ease.

Next, the preferred method of producing the PPS resin (a) used in the present invention will be specifically described in order of a preceding step, a polymerization reaction step, a recovery step, and post-treatment step, but of course, it is not limited to this method.

### [Preceding Step]

In a method of producing the PPS resin (a), a sulfurizing agent is usually used in a form of hydrate. However, it is preferable that before adding a polyhalogenated aromatic compound, a mixture containing an organic polar solvent and the sulfurizing agent be heated to remove an excess amount of water from the system.

As mentioned above, a sulfurizing agents can also be used, which are prepared from alkali metal hydrosulfides and alkali metal hydroxides in a reaction system in situ or in a tank separate from the polymerization tank. There are no particular limitations on this method, but a preferred example is a method in which an alkali metal hydrosulfide and an alkali metal hydroxide are added to an organic polar solvent in an inert gas atmosphere at a temperature range from room temperature to 150°C, preferably from room temperature to 100°C, and the temperature is raised to 150°C or more, preferably 180 to 260°C, under ambient pressure or reduced pressure, to distill off water. Polymerization aids may be added at this stage. To promote the distillation of water, toluene or the like may be added to carry out the reaction.

In the polymerization reaction, the amount of water in a polymerization system is preferably 0.3 to 10.0 mol per mole of the charged sulfurizing agent. An amount of water in a polymerization system herein means the amount of water charged into the polymerization system minus the amount of water removed from the polymerization system. The water to be charged may be in any form, such as water, an aqueous solution, or water of crystallization.

### [Polymerization Reaction Step]

The PPS resin (a) is produced by reacting a sulfurizing agent with a polyhalogenated aromatic compound in an organic polar solvent in a temperature range of 200°C or more and lower than 290°C.

At the time of starting the polymerization reaction step, the organic polar solvent, the sulfurizing agent, and the polyhalogenated aromatic compound are mixed at a temperature range from room temperature to 240°C, preferably from 100°C to 230°C, desirably under an inert gas atmosphere. Polymerization aids may be added at this stage. These raw materials may be charged in any order or simultaneously.

This mixture is typically heated to a temperature range from 200°C to less than 290°C. There is no particular limitation on the rate of temperature rise, but a rate of 0.01 to 5 °C/min is usually selected, and a rate in a range of 0.1 to 3 °C/min is more preferable.

In general, the final temperature is raised to 250 to less than 290°C and the reaction is carried out at that temperature for typically 0.25 to 50 hours, preferably 0.5 to 20 hours.

A method in which reaction is carried out, for example, at 200°C to 260°C for a certain period of time before reaching the final temperature, and then the temperature is raised to 270°C to less than 290°C is effective in obtaining a higher degree of polymerization. In this case, as the reaction time at 200°C to 260°C, the range of 0.25 to 20 hours is usually selected. Preferably, the range of 0.25 to 10 hours is selected.

In order to obtain a polymer with a higher degree of polymerization, it may be effective to carry out the polymerization in a plurality of stages. When polymerization is carried out in a plurality of stages, it is effective to carry out the polymerization at a point when the conversion rate of the polyhalogenated aromatic compound in the system at 245°C reaches 40 mol% or more, preferably 60 mol%.

The conversion ratio of the polyhalogenated aromatic compound (abbreviated here as PHA) is a value calculated by the following formula. The amount of remaining PHA can usually be determined by gas chromatography.

(A) Cases where the polyhalogenated aromatic compound is added in excess of the alkali metal sulfide in terms of molar ratio Conversion rate=[amount of charged PHA (mol) - amount of remaining PHA (mol)] / [amount of charged PHA (mol) - excess amount of PHA (mol)].
(B) Cases other than (A) above Conversion rate=[amount of charged PHA (mol) - amount of remaining PHA (mol)] / [amount of charged PHA (mol)].

### [Recovery Step]

In the method of producing the PPS resin (a), solid matter is recovered from the polymerization reactants including polymer, solvent, etc. after the polymerization is completed. Regarding the recovery method, it is essential to employ a method in which the reaction mixture is slowly cooled and the particulate polymer is recovered after the polymerization reaction is completed. The slow cooling rate in this case is not particularly limited, but is usually about 0.1 °C/min to 3 °C/min. It is not necessary to perform slow cooling at the same rate throughout the entire slow cooling step. For example, a method may be employed in which slow cooling is performed at a rate of 0.1 to 1 °C/minute until the polymer particles crystallize and precipitate, and then at a rate of 1 °C/minute or more.

### [Post-treatment Step]

The PPS resin (a) may be one which has been produced through the above-mentioned polymerization and recovery steps and then subjected to an acid treatment , a hot water treatment, washing with an organic solvent, or a treatment with an alkali metal or alkaline earth metal.

The acid treatment is carried out as follows. The acid used in the acid treatment of the PPS resin (a) is not particularly limited as long as it does not have an effect of decomposing the PPS resin (a), and examples thereof include acetic acid, hydrochloric acid, sulfuric acid, phosphoric acid, silicic acid, carbonic acid, and propylic acid. Among them, acetic acid and hydrochloric acid are more preferably used, and those decomposing and deteriorating the PPS resin (a), such as nitric acid, are not preferred.

An exemplary method of acid treatment may be carried out by immersing the PPS resin (a) in an acid or an acid aqueous solution, with stirring or heating, as necessary. For example, when acetic acid is used, a sufficient effect can be obtained by immersing the PPS resin powder in an aqueous solution of pH 4 heated to 80 to 200°C, and stirring for 30 minutes. The pH after treatment may be 4 or more, for example, the pH may be about 4 to 8. The PPS resin (a) that has been subjected to the acid treatment is preferably washed several times with water or warm water in order to remove any remaining acid or salt. The water used for washing is preferably distilled water or deionized water, in the sense that it does not impair the favorable chemical denaturation effect of the PPS resin (a) by the acid treatment.

The hot water treatment is carried out as follows. When the PPS resin (a) is subjected to hot water treatment, the temperature of the hot water is preferably 100°C or more, more preferably 120°C or more, even more preferably 150°C or more, and particularly preferably 170°C or more. When the temperature is lower than 100°C, a desired effect of the chemical modification of the PPS resin (a) is small, which is unpreferable.

In order to obtain a desired effect of chemically modifying the PPS resin (a) by hot water washing, the water used is preferably distilled water or deionized water. There are no particular restrictions on the operation of the hot water treatment, which is carried out, for example, by a method in which a predetermined amount of the PPS resin (a) is charged into a predetermined amount of water, and heated and stirred in a pressure vessel, or by a method in which the hot water treatment is continuously performed. The ratio of the PPS resin (a) to water is preferably such that there is more water. Usually, a bath ratio of 200 g or less of the PPS resin (a) with respect to 1 liter of water is selected.

As for an atmosphere of the treatment, since decomposition of the terminal groups is unpreferable, it is desirable to carry out the treatment in an inert atmosphere in order to avoid such decomposition. Furthermore, the PPS resin (a) that has been subjected to the hot water treatment is preferably washed several times with warm water to remove any remaining components.

The washing with an organic solvent is carried out as follows. The organic solvent used for washing the PPS resin (a) is not particularly limited as long as it does not have an action of decomposing the PPS resin (a). Examples thereof include nitrogen-containing polar solvents such as N-methyl-2-pyrrolidone, dimethylformamide, dimethylacetamide, 1,3-dimethylimidazolidinone, hexamethylphosphoramide, and piperazinones; sulfoxide/sulfone-based solvents such as dimethyl sulfoxide, dimethyl sulfone, and sulfolane; ketone-based solvents such as acetone, methylethylketone, diethylketone, and acetophenone; ether-based solvents such as dimethyl ether, dipropylether, dioxane, and tetrahydrofuran; halogen-based solvents such as chloroform, methylene chloride, trichloroethylene, ethylene dichloride, perchloroethylene, monochloroethane, dichloroethane, tetrachloroethane, perchloroethane, and chlorobenzene; alcohol/phenol-based solvents such as methanol, ethanol, propanol, butanol, pentanol, ethylene glycol, propylene glycol, phenol, cresol, polyethylene glycol, and polypropylene glycol; and aromatic hydrocarbon-based solvents such as benzene, toluene, and xylene. Among these organic solvents, N-methyl-2-pyrrolidone, acetone, dimethylformamide, chloroform, and the like are particularly preferably used. These organic solvents may be used alone or as a mixture of two or more of them.

An exemplary method of washing with an organic solvent may be carried out by immersing the PPS resin (a) in the organic solvent, with stirring or heating, as necessary. The washing temperature at the time of washing the PPS resin (a) with an organic solvent is not particularly limited, and an arbitrary temperature from room temperature to about 300°C can be selected. The higher the washing temperature, the higher the washing efficiency tends to be. Usually, the washing temperature from room temperature to 150°C is sufficient to achieve the desired effect. It is also possible to carry out washing under pressure in a pressure vessel at a temperature equal to or higher than the boiling point of the organic solvent. There are also no particular limitation on the washing time. Although it depends on the washing conditions, in the case of batch washing, a sufficient effect can usually be obtained by washing for 5 minutes or more. The washing can also be carried out in a continuous manner.

Examples of the method of alkali metal salt or alkaline earth metal treatment include a method in which an alkali metal salt or an alkaline earth metal salt is added before, during, and after the above preceding step, a method in which an alkali metal salt or an alkaline earth metal salt is added in a polymerization kettle before, during, and after the polymerization step, or a method in which an alkali metal salt or an alkaline earth metal salt is added at the beginning of, in the middle of, and at the end of the above washing step. The easiest method among them is a method in which an alkali metal salt or an alkaline earth metal salt is added after the remaining oligomers and the remaining salts are removed by washing with an organic solvent or by washing with warm water or hot water. The alkali metal or the alkaline earth metal is preferably introduced into the PPS in the form of alkali metal ions or alkaline earth metal ions such as acetates, hydroxides and carbonates. It is preferable to remove excess alkali metal salts or alkaline earth metal salts, for example, by washing with warm water. The concentration of the alkali metal ion or the alkaline earth metal ion when introducing the alkali metal or the alkaline earth metal is preferably 0.001 mmol or more, and more preferably 0.01 mmol or more, with respect to 1 g of the PPS. The temperature is preferably 50°C or more, more preferably 75°C or more, and particularly preferably 90°C or more. There is no particular upper limit to the temperature, but from the viewpoint of operability, a temperature of 280°C or less is usually preferred. The bath ratio (weight of the washing solution relative to dry weight of the PPS) is preferably 0.5 or more, more preferably 3 or more, and even more preferably 5 or more.

In the present invention, from the viewpoint of obtaining a polyphenylene sulfide resin composition with excellent retention stability, a method is preferred in which residual oligomers and residual salts are removed by repeatedly washing with an organic solvent and with warm water at about 80°C or the above-mentioned hot water several times, and then the resulting product is treated with an acid or an alkali metal salt or an alkaline earth metal salt. In particular, a method in which the product is treated with an alkali metal salt or an alkaline earth metal salt is more preferred.

In addition, the PPS resin (a) can be polymerized to a higher molecular weight by thermal oxidative crosslinking treatment by heating under an oxygen atmosphere or by adding the cross-linking agent such as peroxide, after the polymerization is completed.

When dry heat treatment is carried out for the purpose of increasing molecular weight by thermal oxidative crosslinking, the temperature is preferably in the range from 160 to 260°C, more preferably in the range from 170 to 250°C. The oxygen concentration is preferably 5 vol% by or more, and more preferably 8 vol% or more. There is no particular restriction on the upper limit of the oxygen concentration, but the limit is about 50 vol%. The treatment time is preferably 0.5 to 100 hours, more preferably 1 to 50 hours, and even more preferably 2 to 25 hours. The heating device may be an ordinary hot air dryer or a rotary type heating device or a heating device equipped with stirring blades. However, in order to perform the treatment efficiently and more uniformly, it is more preferable to use a rotary type heating device or a heating device equipped with stirring blades.

It is also possible to carry out the dry heat treatment for the purpose of suppressing thermal oxidative crosslinking and removing volatile contents. The temperature is preferably in the range from 130 to 250°C, more preferably in the range from 160 to 250°C. In this case, the oxygen concentration is preferably less than 5 vol%, more preferably less than 2 vol%. The treatment time is preferably 0.5 to 50 hours, more preferably 1 to 20 hours, and even more preferably 1 to 10 hours. The heating device may be an ordinary hot air dryer or a rotary type heating device or a heating device equipped with stirring blades. However, in order to perform the treatment efficiently and more uniformly, it is more preferable to use a rotary type heating device or a heating device equipped with stirring blades.

The PPS resin (a) of the present invention may have functional groups such as carboxyl groups or amino groups introduced into the terminal or side chains of the PPS resin from the viewpoint of improving reactivity with the silicone elastomer with crosslinked structure (b) or other additives. The amount of functional groups is preferably from 25 to 400 µmol/g, more preferably from 25 to 250 µmol/g, still more preferably from 30 to 150 µmol/g, and even more preferably from 30 to 80 µmol/g. By setting the amount of functional groups to 25 µmol/g or more, reactivity with the silicone elastomer with crosslinked structure (b) or other compounds can be obtained, which is preferable. On the other hand, by setting the amount of functional groups in the PPS resin to 400 µmol/g or less, deterioration in processability and deterioration in flame retardance and chemical resistance due to an increase in the amount of volatile components can be suppressed, which is preferable.

Examples of a method of introducing a functional group such as a carboxyl group or an amino group into the PPS resin (a) include a method of copolymerizing a polyhalogenated aromatic compound containing a carboxyl group or an amino group with a sulfurizing agent, and a method of adding a compound containing a carboxyl group or an amino group, such as maleic anhydride or sorbic acid, and reacting it with the PPS resin (a) while melt-kneading. The preferred type of functional group is a carboxyl group or an amino group.

### (2) Silicone Elastomer with Crosslinked Structure (b)

Blending the PPS resin composition of the embodiment of the present invention with the silicone elastomer with crosslinked structure (b) is essential to achieve the polyphenylene sulfide resin composition for battery insulation members that combines excellent productivity, safety, and long-term reliability.

Such a silicone elastomer with crosslinked structure (b) has a main chain structure of organopolysiloxane, and also has a molecular structure in which organopolysiloxane molecules are bonded together by crosslinking. The degree of polymerization of the silicone elastomer with crosslinked structure is preferably 100 or more, and the weight average molecular weight is preferably 10,000 or more. It should be noted that silicone oil and uncrosslinked silicone gum do not have a crosslinked structure and are therefore not included in silicone elastomer with crosslinked structure (b).

Examples of the method of introducing a crosslinked structure include peroxide crosslinking, condensation reaction crosslinking, addition reaction crosslinking, and ultraviolet crosslinking. Examples of peroxide crosslinking include a method in which an alkyl or vinyl group of a silicone polymer is reacted with an organic peroxide such as an alkyl peroxide or an acyl peroxide to form a crosslink. Condensation reaction crosslinking includes a condensation reaction between a silanol group of a silicone polymer and a crosslinking agent, and representative examples of the crosslinking agent include dealcohol type, deacetic acid type, deoxime type, deamido type, dehydroxylamine type, and deacetone type crosslinking agents. In order to promote the reaction, it is preferable to use a tin compound, a titanium compound, a metal fatty salt, or an amino group-containing compound as a catalyst. An examples of the addition reaction crosslinking is a hydrosilylation reaction between a multiple bond of a vinyl group, etc. of a silicone elastomer and a Si-H group. In this case, it is preferable to use a transition metal compound, particularly a platinum compound, as a catalyst.

The silicone elastomer with crosslinked structure (b) may include forms that have copolymerization components in part of molecular structure thereof. Specific examples include copolymers of an organopolysiloxane component with one or more copolymer components selected from polyolefin (polyethylene, polypropylene, polybutylene, etc.), polycarbonate, polyamide, polybutylene terephthalate, polyester elastomer, polystyrene, polyetherimide, polyketone, liquid crystal polymer, polyetherketone, polyetheretherketone, and polyacrylate (poly(methyl methacrylate), etc.). The silicone elastomer with crosslinked structure (b) preferably include 90 wt% or more constituent unites derived from organopolysiloxane.

As a composite containing organopolysiloxane as a constituent unit, a core-shell rubber in which silicone elastomer particles are covered with an acrylic component (silicone acrylic core-shell rubber) or a composite powder in which silicone elastomer is covered with a silicone resin can be used. From the viewpoint of flame retardance and long-term durability, however, it is preferable that the organopolysiloxane is 90 wt% or more.

The silicone elastomer with crosslinked structure (b) preferably contains one or more hydrocarbon groups in its structure, selected from C₁₋₈ alkyl groups (methyl groups, ethyl groups, propyl groups, butyl groups, 2-ethylbutyl groups, octyl groups, etc.), C₃₋₈ cycloalkyl groups (cyclohexyl groups, cyclopentyl groups, etc.), C₂₋₈ alkenyl groups (vinyl groups, propenyl groups, butenyl groups, heptenyl groups, hexenyl groups, allyl groups, etc.), aryl groups (phenyl groups, tolyl groups, xylyl groups, and naphthyl groups, diphenyl groups, etc.). Among them, it preferably contains methyl groups, phenyl groups, or vinyl groups.

From the viewpoint of improving compatibility with the PPS resin, it is also preferred that the organopolysiloxane structure contains one or more functional groups selected from C₁₋₈ alkoxyl groups (e.g., methoxy groups, ethoxy groups, propoxy groups, butoxy groups), amino groups, epoxy groups, carbinol groups, methacrylic groups, ether groups, mercapto groups, carboxyl groups, phenol groups, silanol groups, acrylic groups, carboxylic anhydride groups, polyether groups, aralkyl groups, fluoroalkyl groups, long-chain alkyl groups, higher fatty acid ester groups, higher fatty acid amide groups, and the like, at the molecular chain terminals or molecular chain side chains. Among them, it is preferable to include an alkoxyl group, an amino group, an epoxy group, a methacrylic group, a mercapto group, a carboxyl group, or an acrylic group. It is particularly preferable to include an alkoxyl group, an epoxy group, or a methacrylic group.

The shape of the silicone elastomer with crosslinked structure (b) is not limited, but examples thereof include pellets, bulk, powder, powder aggregates, and flakes. From the viewpoints of handleability, processability, and dispersibility, pellets, powder, powder aggregates, and flakes are preferred.

When shape of the silicone elastomer with crosslinked structure is form of microparticles, the average primary particle diameter (number average primary particle diameter) is preferably 10 µm or less, more preferably 5 µm or less, and even more preferably 3 µm or less, from the viewpoints of dispersibility, flame retardance, and toughness of the PPS resin composition. When the average primary particle diameter exceeds 10 µm, it is not preferable because it becomes the starting point of cracks, leading to deterioration of mechanical properties. On the other hand, a lower limit of more preferably 100 nm or more from the viewpoint of productivity. The average primary particle diameter of the silicone elastomer with crosslinked structure (b) can be calculated by identifying 100 particle diameters randomly from a scanning electron micrograph and determining their arithmetic mean.
In the above micrograph, when the particle is not a perfect circle, that is, elliptical or the like, the maximum diameter of the particle is taken as its diameter. Typical methods of obtaining silicone elastomer with crosslinked structure in the shape of microparticles include a method involving dissolution in a soluble solvent followed by precipitation, a method of forming an emulsion with an emulsifier followed by collection, and a method of mechanically crushing pellet- or bulk-like silicone elastomer with crosslinked structure to obtain microparticles.

The amount of the silicone elastomer with crosslinked structure (b) used in the present invention is essentially 0.1 parts by weight or more and 15.0 parts by weight or less, preferably 0.5 parts by weight or more and 12.0 parts by weight or less, and even more preferably 1 parts by weight or more and 10.0 parts by weight or less with respect to 100 parts by weight of the PPS resin (a). When the amount of the silicone elastomer with crosslinked structure blended exceeds 15.0 parts by weight with respect to 100 parts by weight of the PPS resin, the PPS resin composition becomes too flexible, causing creep deformation as a battery insulation member, which leads to a reduction in long-term reliability. On the other hand, when the amount of the silicone elastomer with crosslinked structure (b) blended is less than 0.1 parts by weight with respect to 100 parts by weight of the PPS resin, sufficient flexibility and toughness and flame retardance of the PPS resin composition cannot be obtained, which is not preferable from the viewpoint of productivity and long-term reliability of a battery insulation member.

It is also possible to use two or more types of silicone elastomer with crosslinked structure in combination.

The shore hardness A of the silicone elastomer with crosslinked structure (b) is preferably 60 HS or less, more preferably 50 HS or less, and even more preferably 45 HS or less. It is preferable that the shore hardness A of the silicone elastomer with crosslinked structure be 60 HS or less, so that the desired flame retardance and toughness can be obtained as an insulation member. On the other hand, there is no particular lower limit, but a significantly smaller shore hardness means equivalent to silicone oil, exhibiting bleed-out upon long-term high-temperature use. Therefore, substantially 10 HS or more is preferred.

### (3) Thermoplastic Elastomer (c)

It is preferable that the PPS resin composition of the embodiment of the present invention contains substantially no thermoplastic elastomer (c). The phrase " contains substantially no thermoplastic elastomer (c)" used herein means that the amount of the thermoplastic elastomer (c) blended is 0.5 parts by weight or less with respect to 100 parts by weight of the PPS resin, and the amount of the thermoplastic elastomer (c) is more preferably 0.3 parts by weight or less, and even more preferably 0.1 parts by weight or less with respect to 100 parts by weight of the PPS resin. Most preferably, no thermoplastic elastomer (c) is contained.
Thermoplastic elastomers are materials that plasticize at high temperatures and exhibit rubber-like elasticity at room temperature. When the thermoplastic elastomer is added to the PPS resin composition, thermal degradation associated with the low long-term high-temperature durability of the thermoplastic elastomer causes deterioration of the mechanical properties of the battery insulation member and elution of deteriorated components into the electrolyte, resulting in reduced long-term reliability. Since the flame retardance of the battery insulation member may be reduced due to the low flame retardance of the thermoplastic elastomer itself, the PPS resin composition of the embodiment of the present invention contains substantially no thermoplastic elastomer (c). In addition, silicone elastomers are thermosetting elastomers, and therefore are different from the thermoplastic elastomers (c).

Specific examples of the thermoplastic elastomer include olefinic thermoplastic elastomers, polyamide-based thermoplastic elastomers, polyester-based thermoplastic elastomers, and styrene-based thermoplastic elastomers. Examples of the olefinic thermoplastic elastomer include ethylene-butene copolymer, ethylene-propylene copolymer, ethylene-hexene copolymer, ethylene-octene copolymer, ethylene-vinyl acetate copolymer, ethylene-methyl acrylate copolymer, ethylene-ethyl acrylate copolymer, ethylene-glycidyl methacrylate copolymer, ethylene-butyl acrylate copolymer, ethylene-methyl acrylate copolymer, ethylene-styrene copolymer, ethylene-methyl acrylate-glycidyl methacrylate copolymer, ethylene-ethyl acrylate-glycidyl methacrylate copolymer, ethylene-vinyl acetate - glycidyl methacrylate copolymer.

### (4) Other Additives (d)

Resins other than the PPS resin (a) and the silicone elastomer with crosslinked structure (b) may be added to the PPS resin composition of the embodiment of the present invention to the extent that the effect of the present invention is not impaired. Specific examples thereof include, but not limited to, polyamide, polybutylene terephthalate, polyethylene terephthalate, polyetherimide, polyetherimide-siloxane copolymer, polyketone, liquid crystal polymer, polyetherketone, polyetheretherketone, fluororesin (polytetrafluoroethylene(PTFE), ethylene-tetrafluoroethylene copolymer (ETFE), tetrafluoroethylene-perfluoro(alkylvinylether) copolymer (PFA), tetrafluoroethylene-perhexafluoropropylene copolymer (FEP), ethylene-tetrafluoroethylene-hexafluoropropylene copolymer, polyvinylydene fluoride (PVDF), polychlorotrifluoroethylene(PCTFE). The amount of the resin added is preferably less than 10 parts by weight, preferably less than 5 parts by weight, and more preferably less than 3 parts by weight, with respect to 100 parts by weight of the PPS resin. The lower limit is preferably 0 parts by weight, that is, it is preferable that these resins are not contained.

Various compounds shown below can be added to the PPS resin composition of the embodiment of the present invention for the purpose of modification. Plasticizers such as polyalkylene oxide oligomer-based compounds, thioether-based compounds, ester-based compounds, and organophosphorus-based compounds; crystal nucleating agents such as organophosphorus compounds and polyetheretherketones; montanate waxes; metallic soaps such as lithium stearate and aluminum stearate; mold release agents such as ethylenediamine-stearic acid-sebacic acid polycondensation products, water, lubricants, UV inhibitors, coloring inhibitors, coloring agents, foaming agents, phosphorus-based flame retardants, halogen-based flame retardants, inorganic flame retardants, and other ordinary additives can be added. For any of the above compounds, when the addition amount exceeds 10 parts by weight with respect to a total of 100 parts by weight of the PPS resin composition, the inherent properties of the PPS resin composition of the present invention will be impaired, which is not preferable. The addition amount is preferably 5 parts by weight or less, and more preferably 1 part by weight or less.

In the present invention, organosilane compounds and epoxy resins can be added for the purpose of increasing the toughness of the PPS resin composition.

Specific examples of the organosilane compound are preferably organosilane compounds having at least one functional group selected from the group consisting of an isocyanate group, an epoxy group, an amino group, a hydroxyl group, a mercapto group, an ureido group, and an alkoxy group. Specific examples preferably include 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, N-(2-aminoethyl)-3-aminopropyltrimethoxysilane, N-(2-aminoethyl)-3-aminopropylmethyldimethoxysilane, 3-aminopropyltrimethoxysilane, 3-aminopropyl triethoxysilane, 3-aminopropylmethyldiethoxysilane, N-phenylaminomethyltrimethoxysilane, N-phenylaminopropyltrimethoxysilane, dimethoxymethyl-3-piperazinopropylsilane, 3-piperazinopropyltrimethoxysilane, 3-isocyanatopropyltrimethoxysilane, 3-isocyanatopropyltriethoxysilane, 3-isocyanatopropylmethyldimethoxysilane, 3-isocyanatopropylmethyldiethoxysilane, 3-isocyanatopropylethyldimethoxysilane, 3-hydroxypropyltrimethoxysilane, 3-mercaptopropyltrimethoxysilane, 3-mercaptopropyltriethoxysilane, 3-mercaptomethyldimethoxysilane, and γ-ureidopropyltrimethoxysilane.

Among the above-described organosilane compounds, 3-isocyanatopropyltriethoxysilane, 3-aminopropyltriethoxysilane, and 2-(3,4-epoxycyclohexyl)ethyltriethoxysilane are preferred from the viewpoint of reactivity and handling.

Each of these alkoxy organosilane compounds can be used alone or in the form of a mixture of two or more thereof.

The amount of these organosilane compounds used in the present invention is preferably from 0.01 to 10 parts by weight, preferably from 0.1 to 5 parts by weight, and more preferably from 0.3 to 3 parts by weight with respect to 100 parts by weight of the PPS resin. It is preferable to set the amount of the organic silane compound blended to 10 parts by weight or less, since this makes it possible to maintain the flame retardance of the resulting PPS resin composition. When the amount of the organosilane compound blended is 0.01 part by weight or more, the reaction between the PPS and the organosilane compound is sufficient, and excellent toughness can be exhibited, which is preferable.

Specific examples of epoxy resins include bisphenol A-type epoxy resins, bisphenol F-type epoxy resins, brominated epoxy resins, special backbone bifunctional epoxy resins with biphenyl or naphthalene backbone, glycidyl ether-type epoxy resins represented by polyfunctional epoxy resins such as cresol novolac-type, trisphenol methane-type, dicyclopentadiene-type, etc., glycidyl amine-type epoxy resins represented by aromatic amine-type and aminophenol-type, glycidyl ester-type epoxy resins represented by hydrophthalic acid and dimer acid, etc. The addition amount of such epoxy resin is preferably 0.1 to 5 parts by weight, especially preferably 0.2 to 3 parts by weight, with respect to a total of 100 parts by weight of the PPS resin composition.

Although not an essential component, an inorganic filler can be blended in the PPS resin composition of the embodiment of the present invention to the extent that the effect of the present invention is not impaired. Specific examples of such inorganic fillers that can be used include glass fibers, carbon fibers, carbon nanotubes, carbon nanohorns, potassium titanate whiskers, zinc oxide whiskers, calcium carbonate whiskers, wallastenite whiskers, aluminum borate whiskers, fibrous fillers such as aramid fibers, alumina fibers, silicon carbide fibers, ceramic fibers, asbestos fibers, gypsum fibers, and metal fibers, or fullerene, talc, wollastonite, zeolite, sericite, mica, kaolin, clay, pyrophyllite, bentonite, asbestos, silicates such as alumina silicate, metal compounds such as silicon oxide, magnesium oxide, alumina, zirconium oxide, titanium oxide, and iron oxide, carbonates such as calcium carbonate, magnesium carbonate, and dolomite, sulfates such as calcium sulfate and barium sulfate, non-fibrous fillers such as glass beads, glass flakes, glass powder, ceramic beads, boron nitride, silicon carbide, carbon black, and graphite. Among them, glass fiber, calcium carbonate, and carbon black are preferred, and calcium carbonate and carbon black are particularly preferred from the viewpoint of anticorrosive and lubricating effects. These inorganic fillers may also be hollow, and two types or more of them can be used in combination. These inorganic fillers may also be pre-treated with coupling agents such as isocyanate-based compounds, organosilane-based compounds, organotitanate-based compounds, organoborane-based compounds and epoxy compounds for use.

The amount of such an inorganic filler to be compounded is selected to be less than 10 parts by weight, preferably less than 5 parts by weight, more preferably less than 3 parts by weight, and even more preferably 1 part by weight or less, with respect to a total of 100 parts by weight of the PPS resin composition. The lower limit is not particularly limited, and preferably 0.0001 parts by weight or more. The incorporation of an inorganic filler is effective in improving the strength of the material, but the incorporation of more than 10 parts by weight of the inorganic filler leads to reduction in toughness, which is unpreferable.

### (5) Method of Producing Resin Composition

Examples of the method of producing the PPS resin composition of the embodiment of the present invention include production in a molten state and production in a solution state. From the viewpoint of simplicity, production in a molten state is preferably used. For production in a molten state, melt kneading using an extruder or melt kneading using a kneader can be used, but from the viewpoint of productivity, melt kneading using an extruder which allows continuous production is preferably used. For melt kneading using an extruder, at least one extruder such as a single screw extruder or a multi-screw extruder such as a twin screw extruder or a four-screw extruder, or a twin-screw single screw composite extruder can be used. From the viewpoints of kneading properties, reactivity, and improved productivity, a multi-screw extruder such as a twin screw extruder or a four-screw extruder is preferably used, and melt kneading using a twin screw extruder is most preferable.

As a more specific method of melt kneading, it is preferable to use a twin screw extruder with L/D (L: screw length, D: screw diameter) of 10 or more, preferably 20 or more, and with two or more, preferably three or more kneading parts, but not necessarily limited thereto. There is no restriction on the upper limit of L/D, but 60 or less is preferable from an economic viewpoint. There is no restriction on the upper limit of the number of kneading parts, but it is preferable that the number of kneading parts be 10 or less from the viewpoint of productivity. The ratio of the kneading part to the total length of the screw is preferably 5% or more, more preferably 10% or more, and even more preferably 15% or more from the viewpoint of dispersibility of the silicone elastomer with crosslinked structure (b) in the PPS resin. On the other hand, the upper limit of the ratio of the kneading part to the total screw length is preferably 40% or less from the viewpoint of preventing degradation of the resin due to excessive shear heat generated during kneading.

As for screw rotation speed, the kneading is preferably carried out under conditions of a screw rotation speed of 150 to 1,000 rpm, preferably 300 to 1,000 rpm, and more preferably 350 to 800 rpm. When the screw rotation speed exceeds 150 rpm, the kneading force is sufficient to suppress the aggregation of silicone elastomer with crosslinked structure (b), leading to development of the desired toughness. When the screw rotation speed exceeds 1,000 rpm, deterioration of the resin and the additives will occur due to excessive shear heat generated during kneading, undesirably leading to a decrease in toughness and mold fouling resistance, burring due to a decrease in melt viscosity, and a decrease in long-term reliability of the battery insulation members due to decomposition products.

The preferred range of the cylinder temperature (°C) is specifically from 280 to 400°C, more preferably from 280 to 360°C, and even more preferably from 280 to 330°C.

The order of mixing the raw materials at the time of melt-kneading is not particularly limited. Any method may be used, for example, a method in which all of the raw materials are blended and then melt-kneaded by the above-mentioned method, a method in which a portion of the raw materials are blended and then melt kneaded by the above-mentioned method, which is blended with the remaining raw materials and melt kneaded, or a method in which a portion of the raw materials are blended and then the remaining raw materials are mixed using a side feeder during melt kneading by a twin screw extruder.

### (6) PPS Resin Composition

The PPS resin composition of the present invention should have a flexural modulus (in accordance with ISO 178 (2010), bending speed 2 mm/min, 23°C), which is one of the physical properties that indicates the flexibility of a material, of 3.1 GPa or more and 3.6 GPa or less, preferably 3.2 GPa or more and 3.6 GPa or less. The PPS resin composition, which is used for battery insulation members, is required to have flexibility from the viewpoint of prevention of breakage during the step of producing insulation members, as well as high rigidity from the viewpoint of creep deformation during long-term use. Because of these conflicting performance requirements, the flexural modulus of the resin composition should be 3.1 GPa or more and 3.6 GPa or less. The method of obtaining the PPS resin composition having such properties is not particularly limited, but an example thereof is to obtain a resin composition in which the amount of the silicone elastomer with crosslinked structure (b) blended with respect to 100 parts by weight of the polyphenylene sulfide resin (a) is 0.1 to 15.0 parts by weight.

The PPS resin composition of the present invention preferably has a flame retardance as measured by the UL94 standard of V-0 in a test piece with a thickness of 1.0 mmt or less, and more preferably has a flame retardance of V-0 in a test piece with a thickness of 0.7 mmt or less, the flame retardance being an index of flame retardance of a material. Possessing such flame retardant properties means that it is possible to achieve a thinner molded product and thus a lighter weight molded product while possessing excellent flame retardant properties. This not only contributes to reducing human and economic losses due to fires, but also contributes to energy savings due to the lighter weight, making the material suitable for use in battery insulation members for automotive such as electric vehicles. Examples of the method of obtaining the PPS resin composition having such properties are not particularly limited, but includes to set the amount of the silicone elastomer with crosslinked structure (b) blended with respect to 100 parts by weight of the polyphenylene sulfide resin (a) to 0.1 to 15.0 parts by weight, to use the silicone elastomer with crosslinked structure in the shape of microparticles having particle size of 100 nm to 10 µm, and to use the silicone elastomer with crosslinked structure having shore hardness A of 60 HS or less. Although the flame retardant mechanism is unclear, it has been found that in a case where a silicone elastomer with crosslinked structure having a particle size and hardness within the above range is used, the flame retardant performance is improved compared to a case where a silicone elastomer outside the above range is used. This is presumably due to the difference in the formation of a flame-retardant layer derived from silicone elastomer during combustion.

In the PPS resin composition of the present invention, a tensile elongation at break (dumbbell test piece (ISO527-2-1A), under condition of tensile speed of 50 mm/min, 23°C (in accordance with ISO527-1,2 (2012))) is preferably 8% or more, more preferably 10% or more, even more preferably 12% or more, and particularly preferably 14% or more, the tensile elongation at break being one of physical values indicating toughness of a material. From the viewpoint of suppressing destruction of the battery insulation member in actual use, the tensile elongation at break of the resin composition is desirably 8% or more. The tensile elongation at break is preferably as high as possible from the viewpoint of preventing breakage of members in actual use and ensuring long-term reliability. Although there is no particular upper limit, it can be, for example, substantially 500% or less. Examples of the method of obtaining the PPS resin composition having such properties are not particularly limited, but includes to set the amount of the silicone elastomer with crosslinked structure (b) blended with respect to 100 parts by weight of the polyphenylene sulfide resin (a) to 0.1 to 15.0 parts by weight, to use the silicone elastomer with crosslinked structure in the shape of microparticles having particle diameter of 100 nm to 10 µm, and to use in combination with the silicone elastomer with an organosilane compound or an epoxy resin.

From the viewpoint of long-term durability as a battery insulation member, it is preferable that the PPS resin composition of the present invention has excellent bleed-out resistance. The generation of bleed-out components from the surface of the molded product is undesirable, as it not only leads to a decrease in the insulation but also to a decrease in the power generation efficiency of the battery. The bleed-out resistance can be evaluated by the following method. Dumbbell test pieces (ISO 527-2-1A) obtained by injection molding are placed in a gear oven set at 180°C and treated for 250 hours. After cooling at room temperature for 24 hours or more, the bleed-out resistance is evaluated based on the presence or absence of bleed-out components on the surface. The method of obtaining the PPS resin composition having such properties is not particularly limited, but one example is to select and use a silicone elastomer with crosslinked structure instead of a non-crosslinked silicone oil.

In the PPS resin composition of the present invention, the retention rate of tensile elongation at break before and after the long-term heat treatment is preferably 50% or more, more preferably 60% or more, more preferably 70% or more, and even more preferably 80% or more, from the viewpoint of long-term durability as a battery insulation member. The higher the retention rate of tensile elongation at break before and after long-term heat treatment of the resin composition, the more preferable it is, and there is no particular upper limit. However, since the substantial upper limit is 100%, it is preferable that it is 100% or less. The retention rate of tensile elongation at break before and after the long-term heat treatment can be evaluated by the following method. Dumbbell test pieces (ISO527-2-1A) obtained by injection molding were placed in a gear oven set at 180°C and treated for 250 hours, and then allowed to cool at room temperature for 24 hours or more. Thereafter, the tensile elongation at break was measured (in accordance with ISO527-1, 2 (2012)) under conditions of a tensile speed of 50 mm/min and 23°C, and the rate of change was calculated as the retention rate, taking the elongation before the long-term heat treatment as 100%. The method of obtaining the PPS resin composition having such properties is not particularly limited, but an example thereof is to set the content of the silicone elastomer with crosslinked structure (b) with respect to 100 parts by weight of the polyphenylene sulfide resin (a) to 0.1 to 15.0 parts by weight, and not to contain a thermoplastic elastomer.

It is preferable that the PPS resin composition of the present invention has a low tensile creep displacement in a high temperature environment. When a battery insulation member is made of a material that has a large tensile creep displacement in a high temperature environment, it will deform during long-term use, reducing the ability to seal the electrolyte, which is undesirable from the viewpoint of safety.
The tensile creep displacement magnitude is preferably 4.0% or less, more preferably 3.7% or less, still more preferably 3.5% or less, and even more preferably 3.0% or less. The tensile creep displacement magnitude of the resin composition closer to 0% is more preferable, and there is no particular lower limit. Since the substantial lower limit is 0%, the tensile creep displacement magnitude of the resin composition is preferably 0% or more. The tensile creep displacement can be evaluated by the method described below. A dumbbell test piece (ASTM No. 4, thickness 1.6 mm) obtained by injection molding is subjected to a treatment under conditions of 80°C, 20 MPa, and 100 hours using a tensile creep tester with a chuck distance of 64 mm, and the displacement magnitude is evaluated. The method of obtaining the PPS resin composition having such properties is not particularly limited, but an example thereof is to obtain a resin composition in which the amount of the silicone elastomer with crosslinked structure (b) blended with respect to 100 parts by weight of the polyphenylene sulfide resin (a) is 0.1 to 15.0 parts by weight, and to control the flexural modulus of the resin composition within a range of 3.1 GPa or more and 3.6 GPa or less.

The PPS resin composition of the present invention preferably has an excellent fluidity when melted. The resin composition which has poor fluidity is not preferable because it is difficult to mold it into thin-walled battery insulation members. The melt viscosity can be used as an index of fluidity, and values at a shear rate of 1216 s⁻¹ measured using a capillograph under the conditions of 320°C and orifice length L (mm)/orifice diameter D (mm) = 10 were employed as the melt viscosity of PPS resin composition of the present invention. The melt viscosity is preferably 250 Pa·s or less, more preferably 200 Pa·s or less, and even more preferably 160 Pa·s or less. From the viewpoint of suppressing burrs during molding, the melt viscosity is preferably 80 Pa·s or more, more preferably 90 Pa·s or more, and even more preferably 100 Pa·s or more. The method of obtaining the PPS resin composition having such properties is not particularly limited, but examples thereof include a method in which the PPS resin composition is substantially free of the thermoplastic elastomer (c), a method in which the PPS resin (a) having a weight average molecular weight of 30,000 to 150,000 is adopted, a method in which 0.01 to 10 parts by weight of an organosilane compound is blended with respect to 100 parts by weight of the PPS resin, and a method in which 0.1 to 5 parts by weight of an epoxy resin is blended with respect to 100 parts by weight of the PPS resin composition.

Generally, when the resin composition has excellent fluidity, the flame retardance of the resin composition tends to be low in a combustion test according to the UL94 standard. This is thought to be because drips occur during the combustion test, and the drips cause combustible components to reappear on the surface, continuing the combustion. On the other hand, the PPS resin composition for battery insulation members of the present invention exhibits excellent fluidity required for molding and processing battery insulation members, while exhibiting flame retardance in thin-walled molded products as well.

### (7) Battery Insulation Member

The battery insulation member composed of the PPS resin composition of the present invention refers to an insulation member for primary or secondary batteries, which is used to prevent internal and external short circuits in such primary or secondary batteries. Examples of primary or secondary batteries include primary batteries such as alkaline manganese dry batteries, galvanic batteries, nickel-based primary batteries, lithium batteries, manganese dry batteries, mercury batteries, and all-solid-state batteries, and secondary batteries such as lead storage batteries, lithium-air batteries, lithium ion secondary batteries, lithium ion polymer secondary batteries, lithium iron phosphate batteries, lithium-sulfur batteries, nickel-cadmium storage batteries, nickel-hydrogen rechargeable batteries, nickel-lithium batteries, nickel-zinc batteries, and all-solid-state batteries.

Examples of battery insulation members include insulation plates, gaskets, terminal holders, cases, insulation rings, insulation tubes, wire coatings, and bus bar coatings. The battery insulation members composed of the PPS resin composition of the present invention have excellent toughness, which reduces the risk of breakage during the crimping step, and also have excellent long-term reliability, therefore they are preferably used for insulation plates, gaskets, terminal holders, and cases, which are important safety members of batteries.

The battery insulation member of the present invention can be molded by various molding techniques such as injection molding, extrusion molding, compression molding, blow molding, and injection compression molding, among which injection molding is preferred from the viewpoint of productivity.

### Examples

The present invention will be described in more detail below with reference to the example, but the present invention is not limited thereto.

In Examples and Comparative Examples, the PPS resin (a), silicone elastomer with crosslinked structure (b), thermoplastic elastomer (c), other additives (d) described below were used.

### [(a) PPS Resin (a-1)]

### [Reference Example 1 PPS Resin (a-1)]

In an autoclave equipped with a stirrer, 8,267.37 g (70.00 mol) of 47.5% sodium hydrosulfide, 2,923.88 g (70.17 mol) of 96% sodium hydroxide, 11,434.50 g (115.50 mol) of N-methyl-2-pyrrolidone (NMP), 1,894.20 g (23.10 mol) of sodium acetate, and 10,500 g of ion-exchanged water were charged, and gradually heated to 230°C at ambient pressure with nitrogen flow for about 3 hours, and after 14,780.1 g of water and 280 g of NMP were distilled off, the reaction vessel was cooled to 160°C. The amount of water remaining in the system per mole of alkali metal sulfide charged was 1.06 moles, including the water consumed in the hydrolysis of NMP. The amount of hydrogen sulfide dispersed was 0.017 moles per mole of alkali metal sulfide charged.

Next, 10,420 g (70.89 mol) of p-dichlorobenzene and 9,078.30 g (91.70 mol) of NMP were added, the reaction vessel was sealed under nitrogen gas, the temperature was raised to 240°C at a rate of 0.6 °C/min while stirring at 240 rpm. After the mixture was reacted at 240°C for 40 minutes, the temperature was raised to 275°C at a rate of 0.8 °C/min. Then, 2,394 g (133 moles) of ion-exchanged water was pressurized into the autoclave while cooling to 250°C at a rate of 1.3 °C/min. Thereafter, it was cooled to 200°C at a rate of 1.0 °C /min, and then rapidly cooled to near room temperature.

The contents were taken out and diluted with 26,300 g of NMP, and then the solvent and solid matter were separated by filtration using a sieve (80 mesh), and the obtained particles were washed with 31,900 g of NMP and separated by filtration. The particles were washed several times with 56,000 g of ion-exchanged water, separated by filtration, and then washed with 70,000 g of a 0.05 wt% aqueous solution of acetic acid and separated by filtration. After washing with 70,000 g of ion-exchanged water and filtering, the resulting hydrous PPS particles were dried with hot air at 80°C and then dried at 120°C under reduced pressure. The resulting PPS resin (a-1) had a weight average molecular weight of 73,000, a melting point of 280°C, and a carboxyl group amount of 35 µmol/g.

### [(b) Silicone Elastomer with Crosslinked Structure (b-1, b-2, b-3)]

b-1: silicone elastomer with crosslinked structure (DOWSIL "EP5500" manufactured by Dow Toray Co., Ltd.), shore hardness A: 30HS, amount of polyorganosiloxane: 90% or more, average primary particle diameter: 3 µm
b-2: silicone elastomer with crosslinked structure (DOWSIL "EP2600" manufactured by Dow Toray Co., Ltd.), shore hardness A:50HS, amount of polyorganosiloxane: 90% or more, average primary particle diameter: 2 µm
b-3: silicone elastomer with crosslinked structure(DOWSIL "EP2720" manufactured by Dow Toray Co., Ltd.), shore hardness A: 70 HS, amount of polyorganosiloxane: 90% or more, average primary particle diameter: 2 µm, containing methacryloxy group

### [(c) Thermoplastic Elastomer (c-1)]

c-1: ethylene-glycidyl methacrylate copolymer (olefin resin, BONDFAST ETX-6, manufactured by Sumitomo Chemical Co., Ltd., melting point: 105°C, MFR: 3 g/10 min (190°C, 21.2N load)), amount of reactivity functional group: 6 wt%

### [(d) Other Additives (d-1, d-2, d-3)]

d-1: Silicone powder (DOWSIL "TREFIL F-202" manufactured by Dow Toray Co., Ltd., inorganic powder (silica) carrying 60 mass% of silicone oil (viscosity (25°C): 60,000cs (62,000 mPa·s))
d-2: Silicone oil (DOWSIL "SH200" manufactured by Dow Toray Co., Ltd., viscosity (25°C): 60,000 cs (62,000 mPa·s))
d-3:3-isocyanate propyl triethoxysilane ("KBE9007N" manufactured by Shin-Etsu Silicone Co., Ltd.)

In the following examples, material properties were evaluated by the following methods.

### [Flexural Test]

The PPS resin composition pellets of the present invention were dried at 130°C for 3 hours using a hot air dryer, and then fed to an injection molding machine (SE-75DUZ) manufactured by Sumitomo Heavy Industries, Ltd. set at a cylinder temperature of 320°C and a mold temperature of 145°C. Using a mold having a type A1 test piece shape as specified in ISO 20753 (2008), injection molding was performed under conditions in which the average speed of the molten resin passing through the cross-sectional area of the central parallel part was 400 ± 50 mm/s to obtain a test piece. The central parallel part of this test piece was cut out to obtain a type B2 test piece. The test piece was conditioned at 23°C and 50% relative humidity for 16 hours, and then subjected to flexural modulus measurement in accordance with ISO 178 (2010) at a span of 64 mm and a test speed of 2 mm/min.

### [Tensile Test]

A type A1 test piece obtained under the same molding conditions as those used in the flexural test was conditioned at 23°C and 50% relative humidity for 16 hours, and then subjected to tensile elongation at break (Nominal Strain) measurements at break in accordance with ISO 527-1, 2 (2012) at a chuck distance of 114 mm and a test speed of 50 mm/min.

### [Flame Retardant Test]

The PPS resin composition pellets of the present invention were dried at 130°C for 3 hours using a hot air dryer, and then charged into an injection molding machine (SE-75DUZ) manufactured by Sumitomo Heavy Industries, Ltd. set at a cylinder temperature of 320°C and a mold temperature of 150°C to obtain test pieces for evaluation of flame retardance. The flame retardance of the test piece was evaluated according to the evaluation criteria set forth in the UL94 vertical test. Flame retardancy is ranked in decreasing order of V-0 > V-1 > V-2. When the V-2 standard was not satisfied, it was indicated as "out." The test pieces used had thicknesses of 1.0 mmt and 0.7 mmt.

### [Bleed-out Resistance]

A type A1 test piece obtained under the same molding conditions as those used in the flexural test was conditioned at 23°C and 50% relative humidity for 16 hours, then placed in a gear oven set at 180°C and treated for 250 hours. After being allowed to cool at room temperature for 24 hours or more, the bleed-out resistance was evaluated based on the surface condition. Specifically, when discoloration different from that of the PPS resin composition as a base material was visually observed on the surface after heat treatment, the bleed-out resistance was determined to be poor (bad), and when no discoloration was observed, the bleed-out resistance was determined to be good.

### [Retention Rate of Tensile Elongation at Break Before and After Long-term Heat Treatment]

A type A1 test piece obtained under the same molding conditions as those used in the flexural test was conditioned at 23°C and 50% relative humidity for 16 hours, then placed in a gear oven set at 180°C and treated for 250 hours. After being allowed to cool at room temperature for 24 hours or more, the tensile elongation at break was measured and evaluated under the same conditions as those used in the tensile test. Taking the elongation before the long-term heat treatment as 100%, the rate of change in elongation after the long-term durability treatment was calculated as the retention rate of tensile elongation at break.

### [Tensile Creep Displacement]

The PPS resin composition pellets of the present invention were dried at 130°C for 3 hours using a hot air dryer, and then fed to an injection molding machine (SE-75DUZ) manufactured by Sumitomo Heavy Industries, Ltd. set at a cylinder temperature of 300°C and a mold temperature of 150°C to obtain dumbbell test pieces having a parallel part width of 6 mm and a thickness of 1.6 mm. The displacement magnitude after treatment was evaluated using a tensile creep tester under conditions of chuck distance of 64 mm, 80°C, 20 MPa, and 100 hours.

### [Melt Viscosity]

The PPS resin composition pellets of the present invention were measured using a Capillograph 1B manufactured by Toyo Seiki Seisaku-sho, Ltd. under the conditions of 320°C and orifice length L (mm)/orifice diameter D (mm) = 10. The value at a shear rate of 1216 s⁻¹ was used.

### [Example 1 to 8, Comparative Example 1 to 6]

The PPS resin, the silicone elastomer with crosslinked structure, the thermoplastic elastomer, and other additives were dry blended with the formulation shown in Table 1, and then charged into a TEX30α twin screw extruder (L/D = 30, two kneading parts) manufactured by The Japan Steel Works, Ltd., and melt-kneaded. The kneading was carried out under conditions of a temperature of 300°C and a rotation speed of 300 rpm. After pelletizing with a strand cutter, the pellets were dried at 130°C for 3 hours and then subjected to injection molding.
Evaluation results are as shown in Table 1.

### [Table 1]

**[Table 1]**

| | | | | | Example 1 | Example 2 | Example 3 | Example 4 | Example 5 | Example 6 | Example 7 | Example 8 |
|---|---|---|---|---|---|---|---|---|---|---|---|---|
| Composition | PPS resin (a) | | a-1 | parts by weight | 100 | 100 | 100 | 100 | 100 | 100 | 100 | 100 |
| | Silicone elastomer with crosslinked structure (b) | | b-1 | parts by weight | 1 | 3 | 3 | 5 | 7.5 | 11 | | |
| | | | b-2 | parts by weight | | | | | | | 11 | |
| | | | b-3 | parts by weight | | | | | | | | 11 |
| | Thermoplastic elastomer (c) | | c-1 | parts by weight | | | | | | | | |
| | Other additive (d) | | d-1 | parts by weight | | | | | | | | |
| | | | d-2 | parts by weight | | | | | | | | |
| | | | d-3 | parts by weight | | | 0.5 | | | | | |
| Properties | Flexural modulus | | | GPa | 3.6 | 3.4 | 3.4 | 3.3 | 3.1 | 3.1 | 3.1 | 3.1 |
| | Tensile elongation at break | | | % | 11 | 14 | 20 | 16 | 17 | 25 | 22 | 24 |
| | Flame retardance (thickness, 1.0 mm) | Rank | | - | V-0 | V-0 | V-0 | V-0 | V-0 | V-0 | V-0 | V-0 |
| | Flame retardance (thickness, 0.7 mm) | Rank | | - | V-0 | V-0 | V-0 | V-0 | V-0 | V-0 | V-1 | V-1 |
| | Bleed-out resistance | | | - | good | good | good | good | good | good | good | good |
| | Retention rate of tensile elongation at break before and after long-term heat treatment | % | 82 | 86 | 88 | 82 | 88 | 64 | 64 | 55 | | |
| | Tensile creep displacement | % | 2.7 | 2.9 | 2.9 | 3.3 | 3.7 | 4.0 | 3.7 | 3.7 | | |
| | Melt Viscosity | Pa.s | 140 | 159 | 163 | 132 | 154 | 196 | 180 | 169 | | |

| | | | | | Comparative Example 1 | Comparative Example 2 | Comparative Example 3 | Comparative Example 4 | Comparative Example 5 | Comparative Example 6 |
|---|---|---|---|---|---|---|---|---|---|---|
| Composition | PPS resin (a) | | a-1 | parts by weight | 100 | 100 | 100 | 100 | 100 | 100 |
| | Silicone elastomer with crosslinked structure (b) | | b-1 | parts by weight | | | | | 3 | |
| | | | b-2 | parts by weight | | | | | | |
| | | | b-3 | parts by weight | | | | 25 | | |
| | Thermoplastic elastomer (c) | | c-1 | parts by weight | | | | | 3 | 5 |
| | Other additive (d) | | d-1 | parts by weight | | 3 | | | | |
| | | | d-2 | parts by weight | | | 3 | | | |
| | | | d-3 | parts by weight | | | | | | |
| Properties | Flexural modulus | | | GPa | 3.7 | 3.5 | 3.4 | 2.2 | 3.0 | 3.0 |
| | Tensile elongation at break | | | % | 7 | 4 | 25 | 19 | 19 | 15 |
| | Flame retardance (thickness, | - | | - | V-0 | V-2 | V-0 | V-2 | V-2 | V-2 |
| | 1.0 mm) | | | | | | | | | |
| | Flame retardance (thickness, 0.7 mm) | - | - | V-0 | V-2 | V-0 | V-2 | V-2 | V-2 | |
| | Bleed-out resistance | | - | good | good | bad | good | good | good | |
| | Retention rate of tensile elongation at break before and after long-term heat treatment | | % | 53 | 44 | 55 | 21 | 51 | 47 | |
| | Tensile creep displacement | | % | 2.6 | 2.8 | 2.9 | 8.5 | 4.2 | 4.1 | |
| | Melt Viscosity | | Pa·s | 159 | 147 | 96 | 198 | 184 | 252 | |

The results of Example and Comparative Examples described above will be compared and explained.

In Examples 1 to 8, the PPS resin composition, which contains the PPS resin (a) and the silicone elastomer with crosslinked structure (b) with a specific composition, attains both excellent toughness represented by tensile elongation at break, and excellent flame retardance, and develops bleed-out resistance, retention rate of tensile elongation at break before and after long-term heat treatment, and tensile creep properties. When comparing Examples 6 to 8 in which the silicone elastomers with crosslinked structures have different shore hardness, Examples 6 with lower shore hardness has superior flame retardance than Examples 7 and 8.

As compared to Examples 1 to 8, Comparative Example 1 contains no silicone elastomer with crosslinked structure, and therefore has low tensile elongation at break, which is an index of toughness, and significantly inferior retention rate of tensile elongation at break before and after long-term heat treatment. The PPS resin composition, which combines the flame retardance and toughness required for battery insulation members, cannot be obtained. Comparative Example 1 has high flexural modulus and fails to satisfy flexibility required for battery insulation members.

In Comparative Examples 2 and 3, silicone compounds that do not fall under the component (b) are added, as compared to Example 2. In Comparative Example 2, the addition significantly reduces the tensile elongation at break and the flame retardance. It is presumed that the toughness was reduced due to the use of silicone powder as an inorganic powder. On the other hand, Comparative Example 3, which uses silicone oil, has excellent toughness and flame retardance before heat treatment, but bleed-out components presumably derived from silicone oil are generated on the surface of the molded product due to the heat treatment, and the retention rate of tensile elongation at break after the heat treatment is low, indicating that it is not suitable for battery insulation members to be used in a long-term high-temperature environment.

Comparative Example 4 is inferior in flame retardance, long-term durability, and creep displacement due to a larger amount of silicone elastomer with crosslinked structure compared to Examples 1 to 8.

Comparative Examples 5 and 6 are at the level of thermoplastic elastomer blends, but as in Comparative Example 4, they are inferior in flame retardance, long-term durability, and creep displacement. It is presumed that the deterioration in the physical properties of the resin composition was due to the low flame retardance and low long-term durability of the thermoplastic elastomers.

## Claims

1. A polyphenylene sulfide resin composition for a battery insulation member, comprising:
a polyphenylene sulfide resin (a); and
a silicone elastomer with crosslinked structure (b),
wherein the resin composition comprises 0.1 to 15.0 parts by weight of the silicone elastomer with crosslinked structure (b) with respect to 100 parts by weight of the polyphenylene sulfide resin (a), and has a flexural modulus of 3.1 GPa or more and 3.6 GPa or less in the flexural test in accordance with ISO 178 (2010) on a test piece obtained by injection molding of the resin composition.

2. The polyphenylene sulfide resin composition for a battery insulation member according to claim 1, wherein the resin composition contains substantially no thermoplastic elastomer (c).

3. The polyphenylene sulfide resin composition for a battery insulation member according to claim 1, wherein in measurement according to UL94 standard on a test piece obtained by injection molding of the resin composition, flame retardance measured on the test piece with a thickness of 1.0 mmt or less is V-0.

4. The polyphenylene sulfide resin composition for a battery insulation member according to claim 1, which has a tensile elongation at break of 8% or more in a tensile test according to ISO527-1,2 (2012) on a test piece obtained by injection molding of the resin composition.

5. The polyphenylene sulfide resin composition for a battery insulation member according to claim 1, wherein the silicone elastomer with crosslinked structure (b) is microparticles having an average primary particle diameter of 100 nm to 10 µm.

6. The polyphenylene sulfide resin composition for a battery insulation member according to claim 1, wherein shore hardness A of the silicone elastomer with crosslinked structure (b) is 60 HS or less.

7. The polyphenylene sulfide resin composition for insulation member according to claim 1, wherein the silicone elastomer with crosslinked structure (b) contains 90 wt% or more of constituent units derived from organopolysiloxane.

8. A battery insulation member comprising the polyphenylene sulfide resin composition for a battery insulation member according to any one of claims 1 to 7.
